Europäisches Patentamt

European Patent Office

Office européen des brevets

(19)

(11) EP 0 729 148 A2

(12) **EUROPEAN PATENT APPLICATION**

(43) Date of publication:
28.08.1996 Bulletin 1996/35

(51) Int Cl.⁶: **G11B 20/10**

(21) Application number: 96201401.5

(22) Date of filing: 06.11.1990

(84) Designated Contracting States:
DE FR GB IT NL

(30) Priority: 20.11.1989 US 439559

(62) Application number of earlier application in accordance with Art. 76 EPC: 90312142.4

(71) Applicant: SEAGATE TECHNOLOGY INTERNATIONAL
Georgetown Grand Cayman Island (KY)

(72) Inventors:
• Cronch, Robert D.
Oklahoma City, Oklahoma 73120 (US)

• Koudele, Larry J.
Louisville, Colorado 80027 (US)

(74) Representative: Sturt, Clifford Mark et al
J. MILLER & CO.
34 Bedford Row,
Holborn
London WC1R 4JH (GB)

Remarks:
This application was filed on 17 - 05 - 1996 as a divisional application to the application mentioned under INID code 62.

(54) **Method and apparatus for qualifying data pulses in a raw data signal produced by a magnetic transducer**

(57) The present invention provides a method and apparatus for qualifying data peaks in a raw data signal produced by a magnetic transducer. According to the invention the apparatus comprises:-

at least three comparators (122-134), each connected to a one of at least three corresponding data latches (136-146) and a one of at least three threshold reference levels ($V_H$, $V_M$, $V_L$), comprising a high-level, a medium-level and a low-level threshold level, for comparing the raw data signal with the threshold reference levels to produce a latched output representing the raw data signal;

means for detecting peaks in the raw data signal; and

logic means (148, 150), including means for detecting the polarity cycle in the raw data signal, connected to the data latches (136-146) for selecting the first highest peak occurring in the raw data signal during a polarity cycle, said logic means including a phase lock loop to which only signals indicative of the raw data signal exceeding the medium-threshold level are input.

Fig. 8

## Description

The present invention relates to a method and apparatus for qualifying data peaks in a raw data signal produced by a magnetic transducer. More particularly, the present invention relates to qualifying valid data peaks occurring in a raw data signal produced by a magnetic head used in a magnetic tape or disk drive storage device.

In a magnetic storage system such as a computer disk drive, digital information is magnetically stored at the surface of the disk. Digital information is represented by selectively polarising consecutive areas across the surface of the rotating magnetic disk. When this information is read back from the storage disk, the magnetic polarisation of the medium is sensed and converted into an electrical output signal, i.e. the raw data signal. The raw data signal is representative of the relative strength of the magnetic flux density present on the magnetic disk. This reading and writing operation is accomplished through a magnetic read/write head.

It is highly desirable to provide high levels of information storage densities on the magnetic disk.

One design criteria in a recording system is to provide an areal density as high as possible for the recording surface without compromising the performance of the system. Unfortunately, increased storage densities lead to significant noise levels in the raw data output signal. The source of this noise signal may include irregularities in the disk surface and the electro-magnetic noise associated with proximate electrical devices. Furthermore, high density data coding schemes, such as the 1, 7 code, may further increase the susceptibility of the raw data output signal to unwanted noise. The 1, 7 code employs a single zero magnetic flux cell between any two adjacent flux cells and no more than seven adjacent flux cells. Codes that employ wide "windows" in order to increase disk capacity have larger band widths and longer base lines leading to noise and cross talk susceptibility. This noise problem may be further exacerbated if the magnetic read head drifts slightly off track.

Data coding schemes, which are intended to increase disk capacity and which have a minimum pulse separation of one, provide reduced amplitude levels in closely spaced pulses due to inter-symbol interference. This decreases the signal to noise ratio, which forces the pulse qualification level to be lowered, and further adds to the off track noise problem.

Simple pulse qualification, in which the first peak over a threshold is taken to be the location of the data "pulse" is no longer adequate. The qualification level typically has been set so that there are an equal number of "drop outs" and an equal number of "extra" pulses due to the noise present in the raw data output signal. Coding schemes directed towards increased data densities, however, can be expected to have significantly more occasions where there are multiple peaks occurring above the lowered qualification threshold and/ or peaks located in the long base line between widely separated pulses. Threshold detectors used to disqualify data peaks whose amplitude does not exceed a prescribed level are not adequate to disqualify false data peaks when the ratio between the signal level and the noise level is small. A "first peak" qualification can be expected to place many pulse locations outside the proper window. Not only does this cause data decoding problems, it also causes the phase lock loop used in the read back circuitry to "jitter".

DE-A-3 724 572 discloses a system for qualifying data read from a magnetic recording device. Plural threshold levels are used simultaneously for a reproduced analogue signal to produce a plurality of gate signals corresponding to the threshold levels. It is judged on the basis of the gate signals whether each portion of the reproduced waveform is correct or not when producing a digital output.

US-A-4 634 896 discloses a system for qualifying data read from a magnetic recording device. One positive threshold value and one negative threshold value are employed in the system for eliminating all but the last of a series of peaks in the data.

The present invention seeks to provide improved qualification of the data peak signals produced by a magnetic read/write head during the read operation.

According to one aspect of the present invention, there is provided a method of qualifying peaks in a raw data signal produced by a magnetic transducer, comprising:

providing a high-level ($V_H$), a medium-level ($V_M$) and a low-level ($V_L$) threshold level;
producing comparator outputs representing the signal level of the raw data signal compared to each of the threshold levels ($V_H$, $V_M$, $V_L$);
detecting peaks in the raw data signal to provide a peak representative output; and
providing processing means to process said comparator outputs and said peak representative output to produce a signal representing the first highest peak within a given polarity cycle of the raw data signal, said processing means including a phase lock loop to which only signals indicative of the raw data signal exceeding the medium-level threshold ($V_M$) are input.

According to another aspect of the present invention, there is provided apparatus for qualifying data peaks in a raw data signal produced by a magnetic transducer, the raw data signal having a polarity cycle, and the apparatus comprising:

at least three comparators each connected to a one of at least three corresponding data latches and a one of at least three threshold reference levels ($V_H$, $V_M$, $V_L$), comprising a high-level, a medium-level and a low-level threshold level, for comparing the raw data signal with the threshold reference levels to produce a latched output representing the raw data signal;

means for detecting peaks in the raw data signal; and

logic means including means for detecting the polarity cycle in the raw data signal, connected to the data latches for selecting the first highest peak occurring in the raw data signal during a polarity cycle, said logic means including a phase lock loop to which only signals indicative of the raw data signal exceeding the medium-threshold level are input.

In a preferred embodiment, the method comprises selecting the first highest peak in the raw data signal after the data signal has passed a certain minimum qualification threshold. The minimum qualification threshold is lowered to avoid most drop outs (due to the reduced amplitude signal provided in high density code schemes, such as the 1, 7 code). Problems associated with the increased number of "extra" pulses are eliminated by recognising only the highest peak. The highest peak will generally occur within the proper window.

There may be provided apparatus for qualifying data peaks in a raw data signal produced by a magnetic transducer, the raw data a signal having a polarity cycle, the apparatus including a peak detector arranged to receive the raw data signal and detect peak levels in the raw data signal, means for detecting the polarity cycle in the raw data signal, and means connected to the peak detector and the means for detecting the polarity cycle for selecting the first highest peak occurring in the raw data signal during a polarity cycle.

The peak detector may, for example, comprise a transistor for charging a capacitor, followed by a comparator. In one embodiment described below, the capacitor voltage charges to the highest peak level through the transistor and is re-set at the start of each window. Logic is then provided to determine when the highest peak has been found and to output a corresponding data pulse. This logic is arranged to introduce a delay into the circuitry and, in order to keep a phase lock loop in synchronisation, only pulses occurring over a higher threshold level are sent to the phase lock loop phase detector. This may result in a number of drop outs in relation to the phase lock loop. However, phase lock loops are inherently less susceptible to drop outs than to wrongly located pulses. A reduced threshold level may be used in the data pulse qualification circuitry.

The location of the first highest peak in the raw data output signal may also be determined using a tri-level qualification arrangement. Each peak in the raw data signal triggers a set of flip flops whose inputs are tied to a set of comparators, each having a corresponding qualification level to produce a total of three thresholds. By the pattern of flip flop settings, logic can determine where the data peaks occurred, their relative level and the location of the true peak in the raw data signal based upon the location of the first highest peak.

The present invention is of particular use with coding schemes having large band widths and long base lines, such as in a high density coding scheme. The present invention improves the qualification of the data signal by reducing susceptibility to noise and to cross talk, which may particularly be a problem if the magnetic read head is slightly off track.

The invention is described further, by way of example, with reference to the accompanying drawings, in which:-

Figure 1 is a graphic illustration of the relationship between the encoding pulse data signal, the raw data output signal and the qualified data pulse output signal in a system using a first peak threshold qualification method;

Figure 2 is a block diagram of qualification circuitry;

Figure 3 shows graphically the relationship between voltage and time at various locations in the circuitry of Figure 2;

Figure 4 is a schematic view of a peak detector of the circuitry of Figure 2;

Figure 5 is a detailed block diagram showing shift register logic of the circuitry of Figure 2;

Figure 6 is a timing diagram for the shift register logic of Figure 5;

Figure 7 is an example of a bit pattern in the shift register logic of Figure 5;

Figure 8 is a block diagram of tri-level qualification circuitry according to the present invention; and

Figure 9 shows a raw data signal along with a timing diagram for the tri-level qualification circuitry of Figure 8.

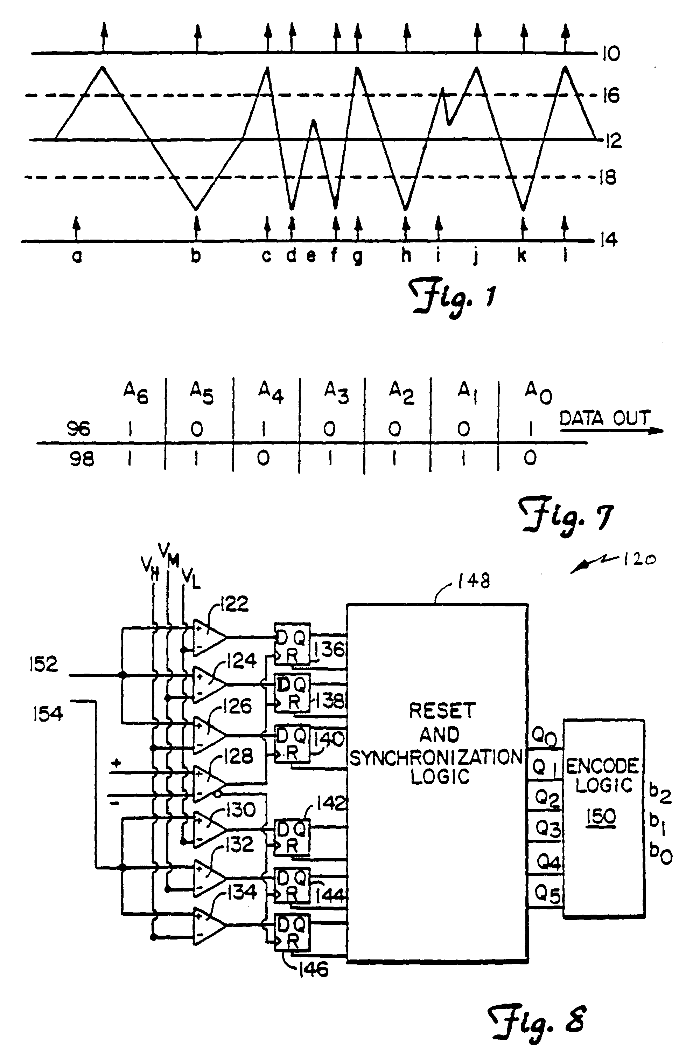

Figure 1 shows graphically an encoding pulse data signal 10, the corresponding raw data signal 12 and a qualified output signal 14, in which qualification is based upon the known detection of the first peak of a given polarity above a qualification level. The dashed lines shown as 16 and 18 represent positive and negative voltage thresholds used to qualify the raw data signal 12.

Figure 1 illustrates the problems associated with the prior art first peak threshold qualification method. In Figure 1, twelve points, labelled _a_ to _l_, are each associated with a different point in time relating to the signal 14. Points _e_, _i_ and _j_ are of particular interest. Point _e_ represents what is referred to as a "drop out", in which the raw data signal produced from the information stored on the magnetic storage medium is too weak to reach the voltage thresholds (16 and 18) and trigger the output signal 14. Thus, a data pulse has been lost, which should have occurred at point e in the signal 14 of Figure 1. This drop out may, for example, be due to an irregularity in the surface of the storage medium.

The point labelled i in the signal 14 of Figure 1 represents the occurrence of an extra pulse produced where the signal 12 has a first peak extending above the upper threshold 16. The first peak qualification scheme demonstrated in Figure 1 mistakenly identifies this first peak as the location of the true data pulse, when the correct location for the data pulse is shown at point j in Figure 1.

In the present invention, the qualification level used in qualifying the raw data signal may be lowered such that drop outs (for example point e in Figure 1) are less likely to occur. Furthermore, the present invention avoids false triggering by an extra pulse as, for example, at point i in Figure 1.

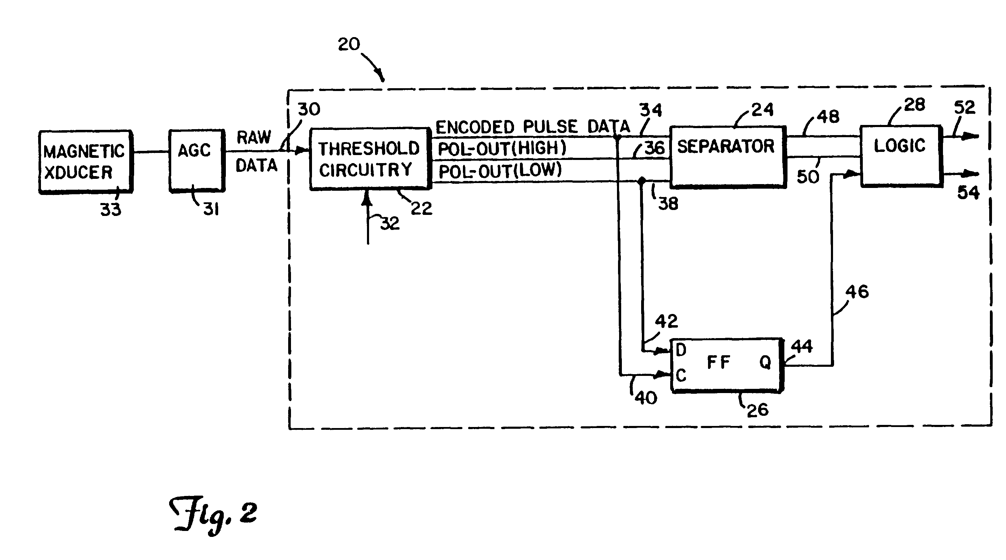

Figure 2 shows in block diagram 20 one embodiment of the present invention, which includes threshold circuitry 22, a separator 24, a flip flop 26, and logic 28. The threshold circuitry 22 preferably includes a pulse detector, a low level gate and polarity detector circuitry (not shown). The separator 24 includes a phase lock loop (not shown) for circuit timing. The logic 28 includes shift registers (not shown) for identifying the location of the highest peak in a raw data signal as explained below in more detail. The flip flop 26 preferably is a D-type flip flop.

The threshold circuitry 22 receives the raw data signal over a line 30 from an automated gain control circuit 31, which acts on a signal developed by a magnetic transducer 33. The threshold circuitry 22 also receives a threshold voltage reference on a threshold voltage reference line 32. The threshold circuitry 22 provides three outputs, namely encoded pulse data on a line 34, a polarity out (high) signal on a line 36 and a polarity out (low) signal on a line 38, each received by the separator 24. The flip flop 26 is connected to the encoded pulse data line 34 at its clock input 40 and to the polarity out (low) line 38 at its D input 42. The flip flop 26 has its Q output 44 connected to a clock polarity line 46. The separator 24 provides outputs to a sync pulse line 48 and a read clock line 50 connected to the logic 28. The logic 28 also receives on the clocked polarity line 46 a clocked polarity signal from the Q output 44 of the flip flop 26. The logic 28 provides outputs to a gated sync pulse data line 52 and a clock line 54.

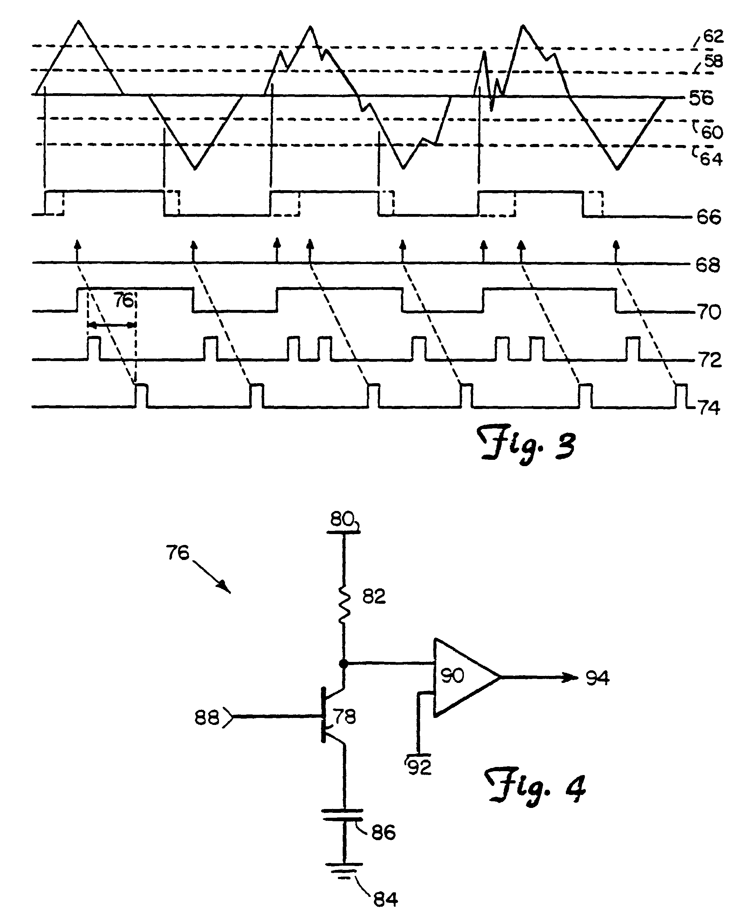

Figure 3 is a logic timing diagram for the block diagram 20 during operation. Graph 56 shows the raw data signal carried on the line 30 of Figure 2. Positive and negative low level voltage thresholds are shown by dashed lines 58 and 60, respectively, in the graph 56 of Figure 3. Positive and negative high level voltage thresholds are shown by dashed lines 62 and 64, respectively, in the graph 56. These voltage threshold levels are generated from the voltage provided on the voltage threshold reference line 32 in Figure 2. A graph of the polarity out (low) signal is shown by the solid line and the graph of the polarity out (high) signal is shown by the dashed line in graph 66 of Figure 3. The two polarity out signals are taken from the polarity out (high) line 36 and the polarity out (low) line 38, respectively. Graph 68 shows a plot of the encoded pulse data carried on the line 34 of Figure 2. Graph 70 shows the clocked polarity signal provided by the flip flop 26 on the clocked polarity line 46. The sync pulse data taken from the sync pulse line 48 is shown in graph 72. The gated sync pulse data provided by the logic 28 taken from the gated sync pulse data line 52 is shown in graph 74.

The raw data signal provided by the line 30 has been amplified through the automatic gain control circuit 31 such that the raw data signal may trigger the threshold circuitry 22. The voltage threshold level may be set by adjusting the voltage provided to the threshold circuitry 22 by the voltage threshold reference line 32. Varying the voltage on the reference line 32 correspondingly varies the threshold levels 58 to 64 shown in the graph 56. Two polarity signals are shown in the graph 66, the solid line being generated using the positive and negative low level voltage thresholds 58 and 60 and the dashed line being generated using the positive and negative high level voltage thresholds 62 and 64. The encoded data signal shown in the graph 68 is generated by the threshold circuitry 22 using standard dV/dt and zero cross detection such that only signals having the proper polarity of zero cross detection can cause an encoded data pulse on the line 34. Furthermore, a method of peak detection is employed that allows only peaks of monotonically increasing amplitude to generate the encoded pulse data of the graph 68. This monotonically increasing peak detection occurs within any given constant polarity interval.

The encoded pulse data and polarity information is sent to a standard phase lock loop and data separator in the separator 24, followed by shift registers and gating logic in the logic 28. This circuitry removes all but the last sync pulse in any constant polarity interval.

Since only monotonically increasing pulses within a data window are represented on the encoded pulse data line 34, by providing gated sync pulses on the gated sync pulse data line 52 corresponding only to the last pulse on the encoded pulse data line 34 within a pulse polarity window, only will the highest level occurring within that window be represented on the gated sync pulse data line 52.

Only encoded pulse data in which both the polarity out (high) line 36 and the polarity out (low) line 38 are in the same high or low state is used by the phase lock loop as phase detector information. This eliminates bad phase information caused by lower data peaks triggering an encoded data pulse. All encoded pulse data, however, is used by the data separator 24 and re-timed into synchronised pulse data. The shift registers and the logic 28 introduce a delay shown by time delay 76 in Figure 3 in the gated sync pulse data shown in the graph 74.

Figure 4 shows a schematic diagram of peak detector circuitry 76, including a transistor 78, used in the threshold circuity 22 of Figure 2. The collector of the transistor 78 is connected to a supply voltage 80 through a resistor 82. The emitter of the transistor 78 is connected to electrical ground 84 through a capacitor 86. The base of the transistor 78 receives the raw data signal from the automated gain control circuit 31 by way of an input 88. A peak detector 90 is connected to the collector of the transistor 78 and to a voltage reference 92 and provides an output 94. The peak detector 90 and the transistor 78 are used to detect monotonically increasing peaks in the data signal from the input 88.

The raw data signal shown in the graph 56 of Figure 3 contains numerous peaks. The transistor 78 and peak detector 90 operate in comb;nation to produce a data pulse signal having pulses representing only those peaks in the raw data signal shown in graph 56 that are monotonically increasing within a given polarity range above or below the corresponding positive or negative low level voltage threshold 58 or 60. Thus, those peaks not reaching the minimum threshold 58 or 60 do not produce a corresponding data pulse at the output 94 of the peak detector 90.

The peak detection circuitry 76 includes the capacitor 86, which holds a charge indicative of the highest signal value provided at the input 88. As the signal of the input increases, the transistor 78 conducts to charge the capacitor 86. At a peak, the transistor 78 will conduct only if the signal at the input 88 has a magnitude exceeding the prior input signal magnitude within a given polarity window in the raw data signal. Thus, signal peaks in the graph 56 of Figure 3, which are not as great as the prior peaks, will not generate a pulse at the output 94 of the peak detector 90 (shown in the graph 68 of Figure 3). The peak detector circuitry 76 is re-set upon a polarity window reversal in the raw data signal.

The threshold circuitry 22 provides the separator 24 with the output 94, comprising the encoded pulse data on the line 34, along with the polarity output (high) and (low) signals on the lines 36 and 38, respectively.

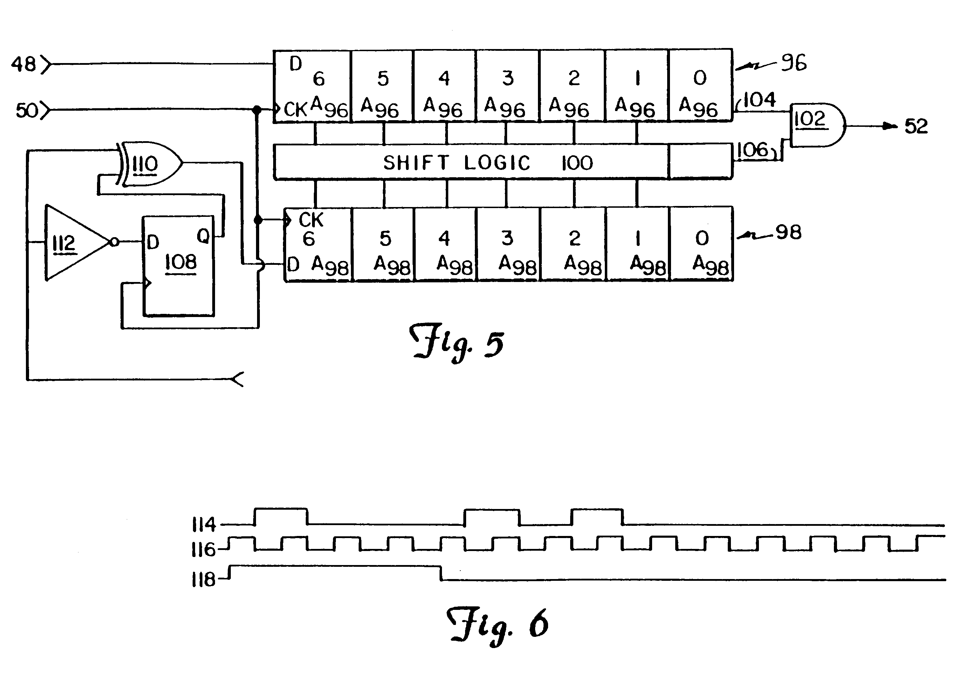

Figure 5 shows a more detailed circuit diagram of the logic 28 shown in Figure 2. The logic 28 includes shift registers 96 and 98 connected to shift logic 100. The shift register 96 is a shift register for the data and the shift register 98 is a shift register for the polarity signals. An AND gate 102 is connected to a data output 104 of the data shift register 96 and an enable output 106 of the shift logic 100. Clock inputs of the data shift register 96 and the polarity shift register 98 receive clock pulses from the read clock line 50 in Figure 2. Data is loaded into the data shift register 96 from the sync pulse line 48. Data for the polarity shift register 98 is generated from the signal provided by the flip flop 26 on the clocked polarity line 46 using a flip flop 108, an exclusive OR gate 110 and an inverter 112.

The polarity shift register 98 receives binary "1"s for positive, and binary "0"s for negative, polarities. Similarly, data on the sync pulse line 48 from the separator 24 is loaded into the data shift register 96. The two shift registers 96 and 98 are clocked at the same rate using the clock pulses on the read clock line 50. The clock rate is derived from the phase lock loop in the separator 24. The shift logic 100 operates in conjunction with both the data shift register 96 and the polarity shift register 98. The shift logic 100 locates the last pulse in the sequence of read pulses provided on the sync pulse data line 48 occurring before a transition in the polarity pulses provided on the clocked polarity line 46. The shift logic 100 then masks out all data pulses in the data shift register 96 occurring within the same polarity period as derived from the polarity shift register 98, except for the last data pulse in the sequence. This is done by selectively activating the enable output 106 of the shift logic 100 connected to the AND gate 102 as pulse data is clocked through the data shift register 96 by clock pulses on the read clock line 50. This last data pulse represents the first highest peak achieved by the raw data signal input to the threshold circuitry 22 within a given polarity cycle for the raw data signal.

The output of the AND gate 102 is shown in the graph 74 of Figure 3, showing that only the chronologically last data pulse provided on the encoded pulse data line 34 is transferred through the logic 28 to the gate sync output 52 within a given polarity zone in the raw data signal.

The gated sync output 52 of the data shift register 96 may then be processed through a phase comparator (not shown) and phase lock loop (not shown) to recover the data and the clock signals.

The logic 28 comprising the data shift register 96, the shift logic 100 and the phase shift register 98 introduces a time delay into the circuit. In order to keep the phase lock loop in synchronisation, only pulses occurring over the high level threshold (62 and 64 in Figure 3) are sent to the phase lock loop phase detector. This may result in a number of "drop outs" in relation to the phase lock loop, but such circuits are inherently less sucsceptible to drop outs than to wrongly located pulses. This problem is improved by using high and low level thresholds (58 to 64) as shown in Figure 3. The data lines 36 and 38 carry high and low threshold information to the phase lock loop (not shown) in the separator 24. Only encoded pulse data (shown in the graph 68 of Figure 3) in which both the high and low threshold lines 36 and 38 are in the same state is used by the phase lock loop for phase detector information. This is to eliminate bad phase information caused by the lower peaks that may deliver encoded pulse data on the line 34. All pulse data shown graphically in the graph 68 of Figre 3, however, is used by the monotonic peak detection circuitry.

This circuitry improves off track performance especially when used with high density codes, such as the 1, 7 code, in which a long base line and low resolution can occur simultaneously. The use of the shift registers 96 and 98 allow as much look ahead as is desired depending only upon the capacity of the shift registers. The circuitry can look ahead all the way to the next adjacent polarity peak. This memory feature is a distinct advantage over methods that employ only true pulse to pulse detection. The circuitry, however, must be robust enough to tolerate the delay introduced due to the shift registers 96 and 98. For the 1, 7 code, this delay will have a worst case duration of 4.66 data bits.

In Figure 6, a logic diagram is shown for the logic circuit 28 of Figure 5. The sync pulse signal is shown as the graph 144, the clock signal from the line 54 is shown as the graph 116, and the clocked polarity signal from the line 46 is shown as the graph 118. The clocked polarity signal in the graph 118 always changes state prior to a sync pulse in the sync pulse signal of the graph 114. Due to circuit design this will always be the case. The rising edge of the clock signal in the graph 116 will shift both the polarity information and the data into the shift registers 96 and 98, respectively. The data shift register 96 contains a logic level "1" whenever a flux reversal has been detected. The polarity shift register 98 contains a logic level "1" normally and a level "0" whenever a polarity change has occurred in the raw data signal. The overall operation of the shift registers 96 and 98 and the shift logic 100 serves to provide a data output only for the last flux reversal in a given polarity zone in the raw data signal. An flux reversals of the same polarity occurring earlier in time will be eliminated.

Using the shift registers 96 and 98 and the shift logic 100, this pulse elimination is accomplished by the following rules:

(1) A "0" in the polarity shift register 98 indicates that the polarity of the corresponding data in the data shift register 96 has changed.

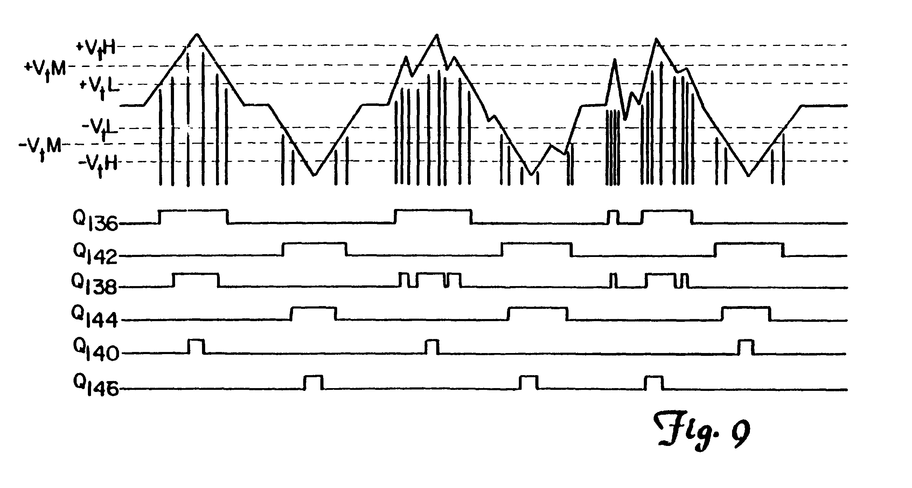

(2) A "1" in a location of the data shift register 96 indicates a flux reversal location. If there is a "0" in the corresponding polarity shift register 98 location, the actual polarity changed prior to that flux reversal occurrence. Therefore, when referring to the data shown in Figure 7, the data shift register 96 locations $A_1$ and $A_4$ are of different polarities, but the data locations $A_4$ and $A_6$ are of the same polarity.

(3) When a "1" in the data shift register 96 reaches the $A_6$ location, all following "1"s in the shift register 96 are compared in the shift register 96 with their own polarity location in the polarity shift register 98 and those polarity locations up to and including the location of the "1" in the data shift register 96. If all of these "1"s see at least a single polarity change (indicated by a "0"), then the "1" in the location $A_0$ is sent out as data. If any of the following "I"s in the data shift register 96 do not see a proceeding "0", the data in the location $A_0$ must be the same polarity as another later "1" and it is eliminated by the AND gate 102.

Mathematically this may be shown with the following Boolean equation:-

$$\overline{\text{Enable}} = (A_{96}1 \times A_{98}1) + [A_{96}2 \times A_{98}1 \times A_{98}2)] +$$

$$[A_{96}3 \times (A_{98}1 \times A_{98}2 \times A_{98}3)] \ldots +$$

$$[A_{96}6 \times (A_{98}1 \times A_{98}2 \times A_{98}3 \times A_{98}4 \times A_{98}5 \times A_{98}6)]$$

where $A_{96}1$ to $A_{96}6$ represent the data locations 1 to 6 in the data shift register 96 and $A_{98}1$ to $A_{98}6$ represent the locations of data stored in the phase shift registers 98.

The location of the highest peak during a period of the raw data cycle may be detected using a tri-level qualification scheme. Each peak triggers a set of flip flops whose inputs are tied to a set of comparators, each comparator having a qualification voltage reference level as one input and the raw signal as the other input. The output of these comparators triggers the flip flops. The shape of the raw data signal determines the state of the flip flops such that by detecting the pattern of the settings of the flip flops, logic can determine which trigger was caused by the highest read signal.

This logic introduces a time delay into the circuit. In order to keep the phase lock loop in sync, only pulses occurring over the medium qualification threshold of the three threshold levels are sent to the phase lock loop detector. This may still result in a number of "drop outs" in relation to the phase lock loop, but phase lock loop circuits are inherently less susceptible to drop outs than to wrongly located pulses.

Figure 8 shows tri-level detection circuitry 120. The circuitry 120 includes comparators 122 to 134 and D-type flip flops 136 to 146. The tri-level detection circuitry 120 also includes re-set and synchronisation logic 148 and encoder logic 150. The raw data signal from the automatic gain control 31 is applied to inputs 152 and 154 which are connected to the non-inverting inputs of the comparators 122 to 134. Tri-level threshold voltages $V_{tH}$, $V_{tM}$ and $V_{tL}$ are applied to the inverting terminals of the comparators 122 to 134. $V_{tH}$ represents the high level voltage threshold and is supplied to the inverting terminals of the comparators 126 and 134. $V_{tM}$ represents the mid-level voltage threshold and is supplied to the inverting inputs of the comparators 124 and 132. $V_{tL}$ represents the low level voltage threshold and is supplied to the inverting inputs of the comparators 122 and 130. The inputs of the comparator 128 receive voltage signals representing the zero crossing of the derivative of the raw data signal provided from a magnetic sensor (not shown). Inverted and non-inverted outputs of the comparator 128 provide the clocking signal used by the flip flops 136 to 146. The D inputs of the flip flops 136 to 146 are connected to the outputs of the comparators 122 to 134. The Q outputs of the flip flops 136 to 146 are connected to the re-set and synchronisation logic 148. Re-set inputs for the comparators 136 to 146 are also connected to the re-set and synchronisation logic 148. The re-set and synchronisation logic 148 provides binary outputs on lines Q0 to Q5 in Figure 8 to the encoder logic 150, which provides encoded binary outputs on lines b0 to b2. The inputs of the zero crossing comparator 128 carry voltage information derived using standard methods of differentiation and zero cross detection such that only positive peaks are re-timed onto positive thresholds and only negative peaks onto negative thresholds. Using this technique, each peak in the raw data signal is detected by sensing the zero crossing of the derivative of the raw data signal.

Figure 9 is a graph of the raw data signal from the automatic gain control 31 (see Figure 2) and the corresponding Q outputs of the flip flops 134 to 146. The raw data signal is labelled $V_{152}$ - $V_{154}$ and represents the voltage difference between the inputs 152 and 154 shown in Figure 8. The dashed lines labelled positive and negative $V_{tH}$, $V_{tM}$ and $V_{tL}$ in Figure 9 represent three voltage thresholds used by the tri-level qualification circuitry 120. The outputs of the flip flops 136 to 146 are labelled $Q_{136}$ to $Q_{146}$. $Q_{136}$, $Q_{138}$ and $Q_{140}$ indicate when the raw data signal has exceeded the low voltage threshold, the medium voltage threshold and the high voltage threshold, respectively. The plots labelled $Q_{142}$, $Q_{144}$ and $Q_{146}$ indicate when the raw data signal taken at $V_{152}$ - $V_{154}$ is less than $-V_{tL}$, $-V_{tM}$ and $-V_{tH}$, respectively. The outputs of the flip flops 136 to 146 are connected to the re-set and synchronisation logic 148, which provides a binary representation of each pulse level in the raw data signal provided to the inputs 152 and 154. The re-set and synchronisation logic 148 also re-sets the flips flops 138 to 144 upon completion of a polarity cycle in the raw data signal.

The encoder logic 150 receives the binary signal on the data lines Q0 to Q5 from the logic 148 and provides an encoded output on the data lines b0 to b2. The encoded binary outputs b0 to b2 may then be directed to a controller unit such as a micro-processor (not shown), which produces an output representing the peak in the raw data signal exceeding the greatest of the three thresholds occurring first within a given polarity cycle in the raw data signal. The comparator 128 used to clock the flip flops 136 to 146 causes only the peaks in the raw data signal to be digitised by the comparators 122 to 126 and 130 to 134 and latched by the flip flops 136 to 146, because the input of the comparator 128 receives the signal related to the derivative of the raw data signal and the flip flops 136 to 146 have edge triggered clock inputs. The circuitry causes only positive peaks to be re-timed onto positive thresholds and only negative peaks to be re-timed onto negative thresholds.

The comparator controlled circuitry of Figure 8 using tri-level peak detection may be particularly useful because the peak detecting algorithm is implemented in computer software. The detection signal may easily be optimised for a given magnetic read back system by prioritising the various combinations of peak threshold levels and their occurrence chronologically within a polarity cycle in the raw data signal from the magnetic head. This versatility provides the ability to optimise the qualification criteria on a system by system basis without repeated re-design of the hardware components.

Only those pulses exceeding the medium level voltage threshold are used as inputs for the phase lock loop (not shown). Pulses exceeding the high and low voltage thresholds are synchronised to the phase lock loop but otherwise have no effect upon phase lock loop operation.

The present invention improves accuracy during read back of information from a magnetic storage medium, such as a magnetic disk. The invention is particularly advantageous for use with high density coding schemes used to increase disk storage capacity. These codes tend to have larger band widths and longer base lines making them more susceptible to noise and cross talk, especially if the magnetic read head is slightly off track. The present invention allows for reduced voltage qualification thresholds, particularly useful in detecting low amplitude raw data signals, such as those in which the minimum pulse separation is low and the amplitude has been reduced to lower the inter-symbol interference. By detecting the first highest peak after the read signal has passed a minimum qualification threshold, and assigning that peak as the real location of the data pulse, it is possible with the present invention to lower the qualification threshold and still avoid problems associated with drop outs.

## Claims

1. A method of qualifying peaks in a raw data signal (152, 154) produced by a magnetic transducer (33), comprising:

   providing a high-level ($V_H$), a medium-level ($V_M$) and a low-level ($V_L$) threshold level;
   producing comparator outputs (122-126, 130-134) representing the signal level of the raw data signal (152, 154) compared to each of the threshold levels ($V_H$, $V_M$, $V_L$);
   detecting peaks in the raw data signal (152, 154) to provide a peak representative output; and
   providing processing means (136-146, 148, 150) to process said comparator outputs (122-126, 130-134) and said peak representative output (128) to produce a signal representing the first highest peak within a given polarity cycle of the raw data signal (152, 154), said processing means including a phase lock loop to which only signals indicative of the raw data signal (152, 154) exceeding the medium-level threshold ($V_M$) are input.

2. A method according to claim 1 further comprising calculating a first derivative of the raw data signal (152, 154), detecting zero crossings in the first derivative of the raw data signal and producing a zero cross output (128) representing the occurrence of the zero crossing in the first derivative of the raw data signal, and employing the zero cross output (128) to clock the comparator outputs (122-126, 130-134) in said processing means (136-146, 148, 150).

3.  A method as claimed in claim 2, in which the comparator outputs (122-126, 130-134) are clocked by providing a clocking signal (128) based upon detection of the zero crossing in the first derivative of the raw data signal representing a peak in the raw data signal (152, 154);

latching the comparator outputs (122-126, 130-134) with a plurality of data latches (136-146) clocked by the first derivative of the raw data signal and providing latched data outputs, whereby the comparator outputs are latched in response to the clocking signal (128) based upon a peak in the raw data signal (152, 154); synchronising the latched data outputs and providing synchronised data outputs (Q0-Q5); resetting the plurality of data latches (136-146) upon completion of a polarity cycle of the raw data signal; and encoding the synchronised data outputs (Q0-Q5) and providing an encoded binary output (b0-b2) representative of peaks in the raw data signal (152, 154) based upon the comparison of the amplitude of the raw data signal to be the plurality of threshold levels ($V_H$, $V_M$, $V_L$).

4.  A method as claimed in any one of claims 1 to 3 in which there are three positive ($V_H$, $V_M$, $V_L$) and three negative ($-V_H$, $-V_M$, $-V_L$) threshold levels.

5.  Apparatus for qualifying data peaks in a raw data signal (152, 154) produced by a magnetic transducer (33), the raw data signal having a polarity cycle, and the apparatus comprising:

at least three comparators (122-134), each connected to a one of at least three corresponding data latches (136-146) and a one of at least three threshold reference levels ($V_H$, $V_M$, $V_L$), comprising a high-level, a medium-level and a low-level threshold level, for comparing the raw data signal with the threshold reference levels to produce a latched output representing the raw data signal; means for detecting peaks in the raw data signal; and logic means (148, 150), including means for detecting the polarity cycle in the raw data signal, connected to the data latches (136-146) for selecting the first highest peak occurring in the raw data signal during a polarity cycle, said logic means including a phase lock loop to which only signals indicative of the raw data signal exceeding the medium-threshold level are input.

6.  Apparatus as claimed in claim 5, further comprising an automatic gain control circuit (31) coupled to the magnetic transducer (33) for receiving the raw data signal and for outputting an amplified raw data signal (30).

7.  Apparatus as claimed in claim 5 or 6 in which there are three positive (122-126) and three negative (130-134) comparators and corresponding threshold reference levels ($V_H$, $V_M$, $V_L$), and further comprising a clock source comparator (128) for providing non-inverted and inverted clock outputs based upon a zero crossing in a first derivative of the raw data signal; a plurality of positive data latches (136, 138, 140) for latching the positive comparator (122-126) outputs in response to the non-inverted clock output of the clock source comparator (128) and providing latched data outputs; a plurality of negative data latches (142, 144, 146) for latching the negative comparator (130-134) outputs in response to the inverted clock output of the clock source comparator (128) and providing latched data outputs; and means (148) for synchronising the latched data outputs from the plurality of positive data latches and the plurality of negative data latches for providing synchronised data outputs (Q0-Q5) and for resetting the plurality of positive data latches and the plurality of negative data latches in response to detection of the polarity cycle of the raw data signal.

8.  Apparatus as claimed in claim 7 including a data encoder (150) coupled to the means (148) for synchronising, wherein the data encoder encodes the synchronised data outputs into encoded binary data (b0-b2).

*Fig. 1*

| | $A_6$ | $A_5$ | $A_4$ | $A_3$ | $A_2$ | $A_1$ | $A_0$ | |
|---|---|---|---|---|---|---|---|---|
| 96 | 1 | 0 | 1 | 0 | 0 | 0 | 1 | DATA OUT → |
| 98 | 1 | 1 | 0 | 1 | 1 | 1 | 0 | |

*Fig. 7*

*Fig. 8*

9

Fig. 2

MAGNETIC XDUCER — 33

AGC — 31

RAW DATA

30

THRESHOLD CIRCUITRY — 22
32

20

ENCODED PULSE DATA — 34
POL-OUT(HIGH)
POL-OUT(LOW)

36
38

SEPARATOR — 24

48

LOGIC — 28

52
54

50

46

42

D  FF  Q — 44
C
40
26

EP 0 729 148 A2

Fig. 3

Fig. 4

EP 0 729 148 A2

48 ⟩

50 ⟩

| D 6 A$_{96}$ | 5 A$_{96}$ | 4 A$_{96}$ | 3 A$_{96}$ | 2 A$_{96}$ | 1 A$_{96}$ | 0 A$_{96}$ |
|---|---|---|---|---|---|---|

CK

96

104

| SHIFT LOGIC 100 | | | | | | | |
|---|---|---|---|---|---|---|---|

106

102 → 52

110

112

D 108 Q

| CK 6 A$_{98}$ | 5 A$_{98}$ | 4 A$_{98}$ | 3 A$_{98}$ | 2 A$_{98}$ | 1 A$_{98}$ | 0 A$_{98}$ |
|---|---|---|---|---|---|---|
| D A$_{98}$ | | | | | | |

98

Fig. 5

114

116

118

Fig. 6

Fig. 9